# EUROPÄISCHE PATENTSCHRIFT

(11) **EP 4 189 372 B1**
(45) Veröffentlichungstag und Bekanntmachung des Hinweises auf die Patenterteilung: **30.09.2026**
(21) Anmeldenummer: 22733139.4
(22) Anmeldetag: 15.06.2022
(51) Int. Cl.: G01N 21/958

(54) **SYSTEM UND VERFAHREN ZUR ÜBERWACHUNG DER GÜTE EINER FAHRZEUGSCHEIBE**
SYSTEM AND METHOD FOR MONITORING THE QUALITY OF A VEHICLE WINDOW
SYSTÈME ET PROCÉDÉ DE SURVEILLANCE DE LA QUALITÉ D'UNE VITRE DE VÉHICULE

(30) Priorität: 07.07.2021 DE 102021117605
(43) Veröffentlichungstag der Anmeldung: 07.06.2023
(73) Patentinhaber: PMA/TOOLS GmbH, 47877 Willich (DE)
(72) Erfinder: ZYGMANOWSKI, Alexander, 59423 Unna (DE); BÖNNING, Jessica, 47877 Willich (DE); SCHMITT, Julian, 47877 Willich (DE)
(74) Vertreter: DREISS Patentanwälte PartG mbB
(86) Internationale Anmeldenummer: PCT/EP2022/066316
(87) Internationale Veröffentlichungsnummer: WO 2023/280540

(56) Entgegenhaltungen:
- EP-A1- 3 285 063
- WO-A1-2005/064321
- WO-A1-2019/206596
- CN-A- 105 158 269
- DE-A1- 102005 050 795
- JP-A- 2000 074 848

## Beschreibung

Die Erfindung betrifft eine Anordnung, umfassend eine Fahrzeugscheibe und ein System zur Überwachung der Güte der Fahrzeugscheibe. WO 2019/206596 A1 offenbart einen optoelektronischen Sensor zur Detektion von Beschädigungen oder Verunreinigungen auf einem transparenten Abdeckmaterial des optoelektronischen Sensors. Der Sensor umfasst das transparente Abdeckmaterial und ein Einkoppelelement, welches optisch mit dem transparenten Abdeckmaterial verbunden ist und eingerichtet ist, einen Lichtstrahl an einer Randfläche des Abdeckmaterials so einzukoppeln, dass eine mehrfache totale interne Reflexion des Lichtstrahls innerhalb des Abdeckmaterials stattfindet.

Aus der JP 2000 074848 A sind eine Vorrichtung und ein Verfahren zur Prüfung von Unregelmäßigkeiten in einer lichtleitenden Materialprobe in einer Laborumgebung bekannt. Aus der DE 10 2005 050 795 A1 ist eine mobile Messvorrichtung zur Bestimmung der Dicke und/oder der optischen Transmissionseigenschaften einer Scheibe bekannt. Aus der CN 105 158 269 A1 ist ein System zur Prüfung optischer Komponenten von Hochleistungslasern bekannt. EP 3 285 063 A1 offenbart eine Anordnung, umfassend eine Fahrzeugscheibe und ein System zur Überwachung einer Fahrzeugscheibe auf Regentropfen, wobei die Fahrzeugscheibe transparent ist, sich in einer Hauptebene erstreckt und in einem Fahrzeug eingebaut ist. Das System umfasst eine Strahlungsquelle zur Erzeugung eines Laserstrahls und eine Strahleinkopplungseinrichtung mit einer Strahleinkopplungsfläche zur Strahleinkopplung des Strahls, welche den Strahl in einen Messabschnitt weiterleitet, wobei der Messabschnitt durch einen Teilabschnitt der Fahrzeugscheibe gebildet ist und eine zu der Hauptebene parallele Einkoppelfläche aufweist.

Der Erfindung liegt die Aufgabe zugrunde, eine Anordnung und ein Verfahren zur Überwachung der Güte einer transparenten, sich in einer Hauptebene erstreckenden Fahrzeugscheibe anzugeben, wobei sich die Anordnung und das Verfahren für den Einsatz während des Betriebs eines Fahrzeugs mit eingebauter Fahrzeugscheibe eignen.

Diese Aufgabe wird erfindungsgemäß gelöst durch eine Anordnung mit den Merkmalen des Patentanspruchs 1.

Eine solche Anordnung ermöglicht es, Beschädigungen eines Messabschnitts einer Fahrzeugscheibe detektieren zu können. Bei der Fahrzeugscheibe handelt es sich insbesondere um eine Windschutzscheibe, welche über die Betriebsdauer eines Fahrzeugs hinweg durch Witterung und Steinschläge stark beansprucht ist.

Die zunehmende Verbreitung von Fahrerassistenzsystemen und die Entwicklung von Fahrzeugen, die zumindest in bestimmten Betriebszuständen des Fahrzeugs zumindest teilautonom fahren sollen, bedingt, dass die Umgebung eines Fahrzeugs zunehmend genau erfasst werden muss. Zu diesem Zweck werden Kameras und Sensoren unterschiedlicher Wirkprinzipien eingesetzt, welche zum Teil auch durch die Fahrzeugscheibe, insbesondere durch die Windschutzscheibe, vor der Umgebung des Fahrzeugs geschützt sind. Damit diese Kameras und Sensoren betriebssicher funktionieren, ist es daher erforderlich, dass die Windschutzscheibe zumindest in einem diesen Kameras oder Sensoren zugeordneten Bereich zumindest weitestgehend beschädigungsfrei ist und hinreichend gute optische Eigenschaften aufweist.

Es ist denkbar, dass die Fahrzeugscheibe nur in einem sehr kleinen und lokal begrenzten Bereich eine minimale Beschädigung aufweist, beispielsweise eine einzelne Vertiefung an der Oberfläche der Fahrzeugscheibe. Eine Erfassung nur einer solchen, einzelnen Minimalbeschädigung könnte zu einer verfälschten Bewertung der Güte der Fahrzeugscheibe führen, beispielsweise zu einer Bewertung dahingehend, dass die Fahrzeugscheibe ausgetauscht werden muss, obwohl diese nur eine einzelne, kleine und punktuell begrenzte Beschädigung aufweist.

Erfindungsgemäß ist es nun möglich, dass ein Teilabschnitt der Fahrzeugscheibe (also der Messabschnitt) mit einer Vielzahl von Strahlen beaufschlagt wird, wobei die Strahlen in unterschiedlichen Bereichen der Strahleinkopplungsfläche auf die Strahleinkopplungsfläche lenkbar sind. Zu diesem Zweck wird eine Strahleinkopplungseinrichtung verwendet, die eine Strahleinkopplungsfläche aufweist, welche sich über eine Breite und über eine zu der Breite senkrechte Höhe erstreckt. Die Strahleinkopplungseinrichtung lenkt einen eingekoppelten Strahl um, und zwar in Richtung einer Einkoppelfläche des Messabschnitts. Die Einkoppelfläche des Messabschnitts ist durch einen Teilabschnitt der Innenseite der Fahrzeugscheibe gebildet. Von dort aus läuft ein Strahl in den Messabschnitt hinein und wird innerhalb des Messabschnitts zumindest einmal an einer fahrzeugaußenseitigen Begrenzungsfläche der Fahrzeugscheibe totalreflektiert.

Vorzugsweise umfasst das System der Anordnung eine Steuereinrichtung zur Steuerung der mindestens einen Antriebseinrichtung, wobei die Steuereinrichtung derart eingerichtet ist, dass eine Vielzahl von einzelnen Strahlen auf die Strahleinkopplungsfläche lenkbar sind, wobei die jeweiligen Strahleinkopplungspositionen auf der Strahleinkopplungsfläche zueinander versetzt und sowohl über die Breite als auch über die Höhe der Strahleinkopplungsfläche verteilt angeordnet sind.

Bei der Vielzahl von unterschiedlichen Strahleinkopplungspositionen handelt es sich beispielsweise um eine Anzahl von n>9, insbesondere n>100, insbesondere von n>600.

Es ist bevorzugt, dass die Strahleinkopplungspositionen über die Strahleinkopplungsfläche hinweg matrixartig verteilt angeordnet sind, über gedachte Zeilen und Spalten der Strahleinkopplungsfläche hinweg.

Die gedachten Zeilen erstrecken sich über die Breite der Strahleinkopplungsfläche hinweg; die Zeilenanzahl beträgt mindestens 3, vorzugsweise mindestens 10, insbesondere mindestens 20.

Die gedachten Spalten erstrecken sich über die Höhe der Strahleinkopplungsfläche hinweg; die Spaltenanzahl beträgt mindestens 3, vorzugsweise mindestens 10, insbesondere mindestens 30.

Der Anzahl von Zeilen und Spalten der Strahleinkopplungsfläche entsprechend ist die Strahleinkopplungsfläche in gedachte Felder unterteilt (nach Art eines Schachbretts). Es ist möglich, dass sich die jeweiligen Strahleinkopplungspositionen bezogen auf ein einzelnes Feld in zentraler Lage des jeweiligen Feldes befinden; dies ist jedoch nicht zwingend.

Die Verteilung der Strahleinkopplungspositionen über die Breite der Strahleinkopplungsfläche hinweg korreliert vorzugsweise damit, dass über die Breite des Messabschnitts hinweg die verschiedenen Strahlen zueinander versetzt sind, also aus einer fahrzeugaußenseitigen Perspektive parallel zueinander oder fächerförmig zueinander versetzt angeordnet sind.

Die Verteilung der Strahleinkopplungspositionen über die Höhe der Strahleinkopplungsfläche hinweg korreliert vorzugsweise damit, dass unterschiedliche Strahlen mit unterschiedlich flachen (auf eine Dickenrichtung der Fahrzeugscheibe bezogenen) Einfallswinkeln in den Messabschnitt eingeleitet werden, so dass sich die Positionen, an denen an der fahrzeugaußenseitigen Begrenzungsfläche der Fahrzeugscheibe eine Totalreflexion stattfindet, verschieben bzw. hinsichtlich ihrer Anzahl variieren.

Die vorgeschlagene Anordnung ermöglicht es, eine Vielzahl von Strahlen in den Messabschnitt einzuleiten, die über die flächige Erstreckung des Messabschnitts hinweg verteilt angeordnet sind und die in ihren auf die Dickenrichtung der Fahrzeugscheibe bezogenen Einfallswinkeln variieren.

Die Vielzahl der Strahlen ermöglicht es, eine Vielzahl von potentiellen Beschädigungspositionen des Messabschnitts der Fahrzeugscheibe mit einem totalreflektierenden Strahl zu beaufschlagen. Befindet sich an dem Ort einer solchen Totalreflexion eine Beschädigung der Fahrzeugscheibe, geht dies mit einem in die Umgebung des Fahrzeugs gerichteten Streulichtverlust einher und mit der Intensitätsabnahme eines in den Messabschnitt eingekoppelten und wieder aus dem Messabschnitt ausgekoppelten Strahls. Allerdings bedeutet der Streulichtverlust für einen einzelnen der Vielzahl der Strahlen noch nicht, dass der Messabschnitt so beschädigt ist, dass die Fahrzeugscheibe ausgetauscht werden sollte; diese Aussage wird vielmehr aufgrund einer Vielzahl von Messungen für die unterschiedlich ausgerichteten Strahlen getroffen.

Im Rahmen der Erfindung wurde auch erkannt, dass eine solche Bestimmung einer Güte der Fahrzeugscheibe nicht spontan und in kurzen Zeitintervallen aktualisiert erfolgen muss. Beispielsweise ist es für eine übliche Nutzung eines Fahrzeugs ausreichend, wenn die Bestimmung der Güte einer Fahrzeugscheibe nach Ablauf längerer Intervalle durchgeführt wird, beispielsweise einmal pro Fahrt oder einmal pro Tag oder auch nur einmal pro Woche. Somit kann eine "schleichende" Verschlechterung des Zustands der Fahrzeugscheibe zuverlässig erkannt werden, insbesondere um eine sichere und zuverlässige Funktion von Sensoren und/oder Kameras des Fahrzeugs zu gewährleisten.

Starke und unmittelbar wirksame Beschädigungen einer Fahrzeugscheibe, bspw. große Steinschläge mit Rissbildung, können ohne Weiteres vom Fahrer des Fahrzeugs selbst durch Inaugenscheinnahme erkannt werden; auch aus diesem Grund ist es nicht erforderlich, die Güte der Fahrzeugscheibe im Bereich des Messabschnitts ständig und aktuell zu erfassen.

Vorzugsweise ist der Messabschnitt zu einer Berandung der Fahrzeugscheibe beabstandet. Dies ermöglicht es, den Messabschnitt außerhalb eines schwarzen Siebdruckrandes einer Fahrzeugscheibe anzuordnen.

Die Strahlungsquelle ist vorzugsweise als Laser ausgebildet. Die von einem solchen Laser erzeugten Strahlen haben vorzugsweise eine Wellenlänge, die dem Infrarotbereich zugeordnet ist, also nicht sichtbar ist. Bevorzugte Wellenlängen betragen zwischen 780 nm und 1500 nm. Durch die Verwendung einer Wellenlänge im nicht sichtbaren Bereich ist eine potentielle Störung von Fahrzeuginsassen oder von Personen in der Umgebung des Fahrzeugs ausgeschlossen. Eine Gefährdung solcher Personen ist auch dadurch ausgeschlossen, dass die zur Beaufschlagung des Messabschnitts mit Strahlen erforderliche Energie nur sehr niedrig ist, insbesondere kleiner als 1 Milliwatt.

Es ist bevorzugt, wenn die mindestens eine Antriebseinrichtung mit mindestens einer Umlenkeinrichtung zusammenwirkt, die mindestens ein um eine Schwenkachse verschwenkbares Umlenkungselement zur Umlenkung des Strahls aufweist. Dies ermöglicht eine einfache Veränderung der Strahleinkopplungspositionen auf der Strahleinkopplungsfläche. Ein solches Umlenkungselement kann beispielsweise durch ein Spiegelelement gebildet sein.

Bevorzugt ist es, wenn zwei Umlenkeinrichtungen mit zueinander winkligen, insbesondere zueinander senkrechten, Schwenkachsen vorgesehen sind. Dies vereinfacht die Verteilung der Strahleinkopplungspositionen sowohl über die Breite als auch über die Höhe der Strahleinkopplungsfläche hinweg.

Die Strahleinkopplungsfläche kann beispielsweise eine Rechteckform oder eine Form aufweisen, die daran angenähert ist, beispielsweise eine Trapezform.

Es ist möglich, dass die mindestens eine Antriebseinrichtung mindestens einen Schrittmotor oder ein Galvanometer aufweist, um eine fein aufgelöste Veränderung der Lage und/oder Orientierung eines Strahls vorgeben zu können.

Es ist ferner bevorzugt, wenn sich die Strahleinkopplungseinrichtung über eine Breite des Messabschnitts hinweg entlang einer Hauptachse erstreckt. Diese Hauptachse verläuft vorzugsweise parallel oder im Wesentlichen parallel zu der Hauptebene, in welcher sich die Fahrzeugscheibe erstreckt.

Die Strahleinkopplungseinrichtung weist vorzugsweise eine Prismenform auf, insbesondere mit einer dreieckigen Grundfläche. Diese Ausgestaltung ermöglicht es unter Beanspruchung von nur wenig Bauraum, Strahlen unter einem relativ flachen Einfallswinkel in den Messabschnitt einkoppeln zu können.

Zur weiteren Verbesserung der Qualität eines in die Strahleinkopplungseinrichtung eingekoppelten Strahls ist es bevorzugt, wenn zwischen der Strahlungsquelle und der Strahleinkopplungseinrichtung eine Lochblende angeordnet ist, wobei optional der Lochblende ein Kollimator nachgeschaltet ist, der einen divergenten Strahl parallelrichtet.

Es ist außerdem möglich, dass die Strahlungsquelle in ihrer Intensität modulierbar ist und/oder dass zwischen der Strahlungsquelle und der Strahleinkopplungseinrichtung ein Modulator angeordnet ist, beispielsweise ein mechanischer "Chopper", mit welchem ein Strahl in seiner Intensität beispielsweise annähernd rechteckig zwischen 0% und 100% moduliert werden kann. Alternativ kann zur Intensitätsmodulation auch ein elektrooptischer oder akustooptischer Modulator eingesetzt werden. Auch eine unmittelbare Modulation der Strahlungsquelle, etwa durch Modulation der Betriebsspannung und/oder des Betriebsstroms ist möglich, wodurch auf einen Modulator im Strahlengang verzichtet werden kann. Dies ermöglicht es jeweils, einem noch nicht in den Messabschnitt eingekoppelten Strahl eine Charakteristik, insbesondere eine Frequenz und eine Phase, aufzuprägen, was bei der Auswertung von aus dem Messabschnitt ausgekoppelten Strahlen unter Verwendung eines Lock-in-Verstärkers dazu genutzt werden kann, durch frequenz- und phasenabhängige Detektion Fremdlichteffekte auszufiltern. Das Fremdlicht ist beispielsweise durch eine Fahrzeuginnenbeleuchtung oder durch Lichtquellen in der Umgebung des Fahrzeugs verursacht.

Grundsätzlich ist es denkbar, dass die Anordnung eine Sensoreinrichtung umfasst, welche aus dem Messabschnitt ausgekoppeltes Streulicht erfasst. Bevorzugt ist es aber, dass die Anordnung eine Sensoreinrichtung zur Erfassung einer Intensität eines aus dem Messabschnitt ausgekoppelten Strahls umfasst.

Insbesondere ist es bevorzugt, wenn die Sensoreinrichtung eine zu der Hauptebene der Fahrzeugscheibe parallele Sensorfläche aufweist. Dies ermöglicht einen besonders flachen und raumsparenden Aufbau.

Es ist möglich, dass die Sensorfläche an einer Auskoppelfläche des Messabschnitts anliegt, so dass an der Auskoppelfläche des Messabschnitts (also einem Teilabschnitt der Innenseite der Fahrzeugscheibe) ausgekoppeltes Licht unmittelbar in die Sensorfläche eintritt.

Für eine einfache Montage, welche gegenüber Vibrationen während des Betriebs des Fahrzeugs unempfindlich ist, wird vorgeschlagen, dass zwischen der Sensorfläche und einer Auskoppelfläche des Messabschnitts eine Koppelschicht angeordnet ist, die aus einem Koppelmaterial besteht, welches einen annähernd vergleichbaren Brechungsindex zum Brechungsindex eines die Fahrzeugscheibe bildenden Materials aufweist und dessen Transmission oder Durchlässigkeit für Licht der relevanten Wellenlängen möglichst hoch ist. Ein für eine Fahrzeugscheibe geeignetes Koppelmaterial ist beispielsweise Silikon. Da der Brechungsindex von Silikon und der Brechungsindex des Materials der Fahrzeugscheibe miteinander vergleichbar sind, wird das im Bereich der Auskoppelfläche des Messabschnitts ausgekoppelte Licht durch die Silikonschicht nur geringfügig und zwei Mal gebrochen, so dass der auf die Sensorfläche ausgekoppelte Strahl lediglich geringfügig versetzt ist.

Eine weitere bevorzugte Ausführungsform sieht vor, dass die Sensoreinrichtung in Koppelmaterial vorgenannter Art, beispielsweise Silikon, eingegossen ist. Dies ermöglicht eine Lagerung der Sensoreinrichtung, vorzugweise unter Ausbildung einer Koppelschicht zwischen der Sensorfläche und einer Auskoppelfläche des Messabschnitts.

In beiden vorgenannten Fällen kann die Koppelschicht jeweils auch eine ungleichförmige Dicke aufweisen und insbesondere einen keilförmigen Querschnitt aufweisen und so als Prisma zur Auskopplung der Strahlen aus dem Messabschnitt, insbesondere aus dessen Auskoppelfläche, ausgebildet sein.

Die Anordnung umfasst in vorteilhafter Weise eine Auswerteeinrichtung zur Auswertung einer für eine Vielzahl von einzelnen Strahlen jeweils erfassten Intensität. Wie vorstehend erwähnt, ist es bevorzugt, wenn die Auswerteeinrichtung einen frequenz- und/oder phasenempfindlichen Detektor und/oder Verstärker umfasst, insbesondere einen Lock-in-Verstärker umfasst, um von der Strahlungsquelle abgegebenes Licht, das moduliert wurde, mit dem von der Sensoreinrichtung erfassten Licht vergleichen und Fremdlichteinflüsse zumindest weitgehend eliminieren zu können.

Es ist möglich, dass Strahlen in zeitlicher Abfolge und jeweils einzeln an der Sensorfläche und/oder an unterschiedlichen Positionen der Sensorfläche erfasst werden und dass für jeden der Strahlen ein jeweiliger Intensitätswert gespeichert wird. Dies ermöglicht es, die Intensitätswerte von mindestens zwei unterschiedlichen Strahlen miteinander vergleichen zu können.

Die Anordnung ist insbesondere vorteilhaft, wenn der Messabschnitt einem optischen Sensor, einer Kamera, einem Radarsensor und/oder einem Lidarsensor eines Fahrzeugs zugeordnet ist oder sind. Insbesondere kann eine räumliche Zuordnung zu einem Halter für Sensoren und/oder mindestens einer Kamera eines Fahrerassistenzsystems vorteilhaft sein. Solche Halter sind üblicherweise benachbart zu einem zentralen Rückspiegel an der Innenseite der Windschutzscheibe angeordnet, der auch als "Bracket" bezeichnet wird.

Bei einer weiteren vorteilhaften Ausgestaltung der Anordnung ist eine Umgebungssensoreinrichtung zur Erfassung eines Umgebungszustands in der fahrzeugaußenseitigen Umgebung des Messabschnitts vorgesehen. Hierbei kann es sich beispielsweise um einen Regensensor handeln.

Die Erfindung betrifft ferner ein Verfahren zur Überwachung der Güte einer transparenten, sich in einer Hauptebene erstreckenden Fahrzeugscheibe, bei welchem eine vorstehend beschriebene Anordnung verwendet wird und wobei das Verfahren umfasst:
a) Strahleinkopplung eines Strahls in die Strahleinkopplungsfläche der Strahleinkopplungseinrichtung,
b) Leitung des Strahls durch den Messabschnitt, wobei der Strahl mindestens einmal an einer der Einkoppelfläche des Messabschnitts abgewandten Begrenzungsfläche des Messabschnitts totalreflektiert,
c) Auskopplung des Strahls aus dem Messabschnitt und Erfassung der Intensität des ausgekoppelten Strahls,
d) Wiederholung der Schritte a) bis c) für eine Vielzahl von Strahlen, deren jeweilige Strahleinkopplungspositionen auf der Strahleinkopplungsfläche zueinander versetzt und sowohl über die Breite als auch über die Höhe der Strahleinkopplungsfläche verteilt angeordnet sind,
e) Bildung mindestens einer Kenngröße, welche die Güte der Fahrzeugscheibe betrifft, unter Berücksichtigung der in den Schritten c) erfassten Intensitäten der ausgekoppelten Strahlen.

Die Kenngröße kann beispielsweise dadurch gebildet werden, dass ein Durchschnittswert aller in den Schritten c) erfassten Intensitäten gebildet wird und dass dieser Durchschnittswert mit einem Grenzwert verglichen wird, wobei eine Überschreitung des Grenzwerts mit einer Fahrzeugscheibe ausreichender Güte korreliert und wobei eine Unterschreitung des Grenzwerts mit einer nicht ausreichenden Güte der Fahrzeugscheibe korreliert.

Solche Korrelationen können dem Fahrer auch mit Texthinweisen (beispielsweise in einem Servicemenü) angezeigt werden, beispielsweise mit "Fahrzeugscheibe OK" oder "Fahrzeugscheibe bei nächster Gelegenheit prüfen lassen" oder "Tausch der Fahrzeugscheibe erforderlich".

Die Ermittlung einer Kenngröße, insbesondere des oben genannten Durchschnittswerts, kann insbesondere derart erfolgen, dass die Intensitäten aller oder einer Mehrzahl zeitlich nacheinander auf die Sensorfläche auftreffenden Strahlen über die Sensorfläche integriert erfasst und zu der Kenngröße aggregiert werden. Die integrale Erfassung kann durch Verwendung eines optischen Sensors mit einer niedrigen zeitlichen Auflösung und/oder durch die Verwendung eines Datenspeichers unterstützt werden.

Es ist ferner bevorzugt, wenn das vorstehend erörterte Verfahren zur Bildung einer Referenz-Kenngröße mit einem gereinigten, unbeschädigten (also "guten") Messabschnitt durchgeführt wird und wenn das Verfahren zur Bildung einer Ist-Kenngröße mit einem Messabschnitt einer Fahrzeugscheibe durchgeführt wird, die in ein Fahrzeug eingebaut ist, das in Betrieb genommen ist. Die Bildung der Referenz-Kenngröße erfolgt vorzugsweise unmittelbar im Anschluss an die Herstellung eines Fahrzeugs bzw. unmittelbar im Anschluss an den Einbau einer neuen Fahrzeugscheibe. Die Referenz-Kenngröße kann in einer Speichereinrichtung abgelegt und zur späteren Verwendung wieder aus dieser ausgelesen werden. Die Speichereinrichtung kann Teil der Steuereinrichtung oder der Auswerteeinrichtung sein oder separat, beispielsweise fahrzeugseitig, bereitgestellt sein.

Ferner ist es bevorzugt, wenn ein Umgebungszustand in der außenseitigen Umgebung der Fahrzeugscheibe, insbesondere des Messabschnitts, erfasst wird und wenn das vorstehend erläuterte Verfahren unter der Bedingung durchgeführt wird, dass der Umgebungszustand einen Grenzwert, insbesondere einen Grenzwert für eine maximale Feuchte oder Verschmutzung, nicht überschreitet. Auf diese Weise ist gewährleistet, dass das Verfahren zur Bestimmung der Güte der Fahrzeugscheibe nicht durch eine zu hohe Befeuchtung oder Verschmutzung des Messabschnitts verfälscht wird.

Es ist aber auch möglich, dass die im Zuge des vorstehend erörterten Verfahrens gebildete Kenngröße verwendet wird, um einen Umgebungszustand in der außenseitigen Umgebung der Fahrzeugscheibe zu ermitteln. Dies ermöglicht es beispielsweise, die Signale eines anderen Umgebungssensors, beispielsweise eines Regensensors, zu plausibilisieren.

Weitere Merkmale und Vorteile der Erfindung sind Gegenstand der nachfolgenden Beschreibung und der zeichnerischen Darstellung bevorzugter Ausführungsbeispiele.

In der Zeichnung zeigt
- Fig. 1: eine perspektivische Ansicht einer Ausführungsform eines Systems zur Überwachung der Güte einer Fahrzeugscheibe, aus einer fahrzeugaußenseitigen Perspektive;
- Fig. 2: eine Vorderansicht einer Strahleinkopplungsfläche einer Strahleinkopplungseinrichtung des Systems gemäß Fig. 1;
- Fig. 3: eine Seitenansicht eines Messabschnitts des Systems gemäß Fig. 1;
- Fig. 4: eine schematische Draufsicht auf einen in Einbaulage an einem Fahrzeug oberen und mittigen Abschnitt einer Fahrzeugscheibe in Form einer Windschutzscheibe, mit einem System gemäß Fig. 1;
- Fig. 5: eine perspektivische Ansicht einer weiteren Ausführungsform eines Systems zur Überwachung der Güte einer Fahrzeugscheibe, aus einer fahrzeuginnenseitigen Perspektive;
- Fig. 6: eine schematische Ansicht einer weiteren Ausführungsform, mit Verwendung einer Koppelschicht; und
- Fig. 7: eine perspektivische Ansicht einer Strahlungsquelle des Systems gemäß Figur 5 in vergrößerter Darstellung.

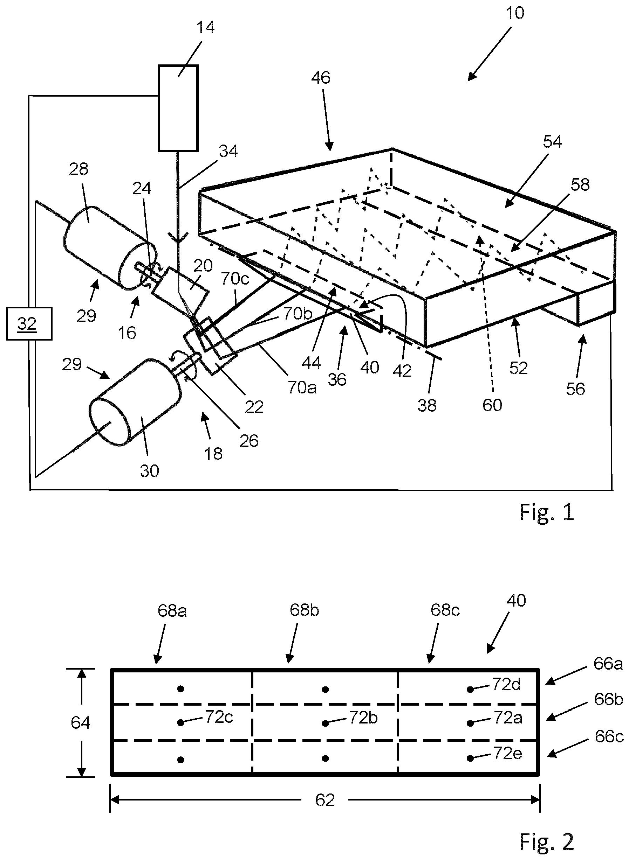

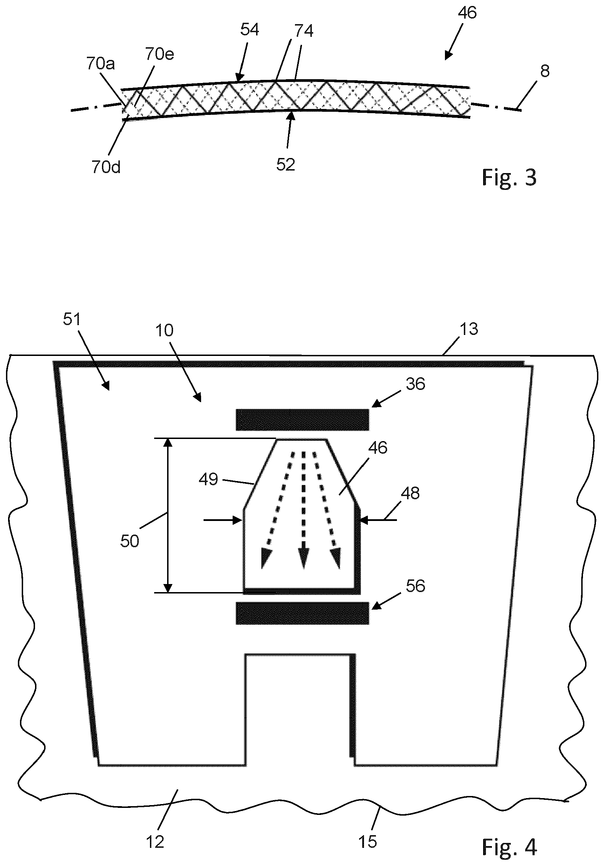

Ein in der Zeichnung insgesamt mit dem Bezugszeichen 10 bezeichnetes System (vergleiche Fig. 1) dient zur Überwachung der Güte einer transparenten, sich in einer Hauptebene 8 (vergleiche Fig. 3) erstreckenden Fahrzeugscheibe 12, die abschnittsweise in Figur 4 dargestellt ist. Bei der Fahrzeugscheibe 12 handelt es sich insbesondere um eine Windschutzscheibe. Der in Figur 4 dargestellte Ausschnitt der Fahrzeugscheibe 12 erstreckt sich von einer in Einbaulage der Windschutzscheibe oberen Berandung 13 und einem weiter unten und bezogen auf die Fahrzeuglängsachse weiter vorne angeordneten Scheibenbereich 15.

Das System 10 umfasst eine (in Fig. 1 nur schematisch dargestellte, ebenfalls innerhalb des Fahrzeugs angeordnete) Strahlungsquelle 14, eine erste Umlenkeinrichtung 16 zur Umlenkung eines von der Strahlungsquelle 14 abgegebenen Strahls 34 und eine zweite Umlenkeinrichtung 18 zur Umlenkung des von der ersten Umlenkeinrichtung 16 umgelenkten Strahls. Von der zweiten Umlenkeinrichtung 18 aus wird der Strahl weiter in Richtung auf eine Strahleinkopplungseinrichtung 36 umgelenkt.

Die Umlenkungseinrichtungen 16 und 18 weisen jeweils als Spiegel ausgebildete Umlenkelemente 20, 22 auf. Die Umlenkelemente 20, 22 sind um jeweilige Schwenkachsen 24, 26 verschwenkbar. Die Schwenkachsen 24 und 26 sind zueinander senkrecht angeordnet. Für den Schwenkantrieb der Umlenkrichtungen 16, 18 sind jeweilige Schrittmotoren 28, 30 vorgesehen, die jeweils eine Antriebseinrichtung 29 bilden. Diese sind durch eine Steuereinrichtung 32 angesteuert. Die Steuereinrichtung 32 dient auch zur Ansteuerung der Strahlungsquelle 14.

Die Strahleinkopplungseinrichtung 36 erstreckt sich, parallel zu der Hauptebene 8 der Fahrzeugscheibe 12, entlang einer Hauptachse 38, vorzugsweise entlang eines Prismas mit einer dreieckigen Grundfläche.

Die Strahleinkopplungseinrichtung 36 weist eine beispielweise rechteckförmige Strahleinkopplungsfläche 40 auf, die in Figur 2 in einer vergrößerten Draufsicht dargestellt ist. Die Strahleinkopplungseinrichtung 36 weist zusätzlich eine Koppelfläche 42 auf, welche an einer Einkoppelfläche 44 eines insgesamt mit dem Bezugszeichen 46 bezeichneten Messabschnitts der Fahrzeugscheibe 12 anliegt.

Der Messabschnitt 46 erstreckt sich über die Fläche der Fahrzeugscheibe 12 hinweg gesehen über eine in Figur 4 mit dem Bezugszeichen 48 bezeichneten Breite (beispielsweise in Fahrzeugquerrichtung) und über eine dazu senkrechte Länge 50 (erstreckt sich in Fahrzeuglängsrichtung und ist gleichzeitig der Neigung der Fahrzeugscheibe 12 entsprechend geneigt). Der Messabschnitt 46 ist beispielsweise benachbart zu der Kamera eines Fahrzeugassistenzsystems angeordnet, wobei ein Sichtfeld der Kamera durch eine Umrandung 49 begrenzt ist, die von einem Halter 51 gebildet ist. Der Halter 51 wird auch als "Bracket" bezeichnet und ist an einer Innenseite 52 der Fahrzeugscheibe fixiert, insbesondere durch Verklebung.

Die Fahrzeugscheibe 12 erstreckt sich parallel zu ihrer Hauptebene 8 zwischen der dem Innenraum des Fahrzeugs zugewandten Innenseite 52 und einer der Umgebung zugewandten Außenseite 54. Die Hauptebene 8 weist, der typischen Bauart einer Windschutzscheibe entsprechend, eine Krümmung oder Mehrfachkrümmung auf.

An einem der Strahleinkopplungseinrichtung 36 abgewandten Ende des Messabschnitts 46 ist eine Sensoreinrichtung 56 vorgesehen, mit einer Sensorfläche 58, die an einer Auskoppelfläche 60 des Messabschnitts 46 anliegt. Die Auskoppelfläche 60 ist durch einen Teilabschnitt der Innenseite 52 der Fahrzeugscheibe 12 gebildet. Es ist möglich, dass zwischen der Sensorfläche 58 und der Auskoppelfläche 60 eine dünne Silikonschicht angeordnet ist (in der Zeichnung nicht dargestellt; diese dient zur optischen Kopplung der Auskoppelfläche 60 mit der Sensorfläche 58).

Die Sensoreinrichtung 56 kommuniziert mit einer Auswerteeinrichtung, welche separat bereitgestellt sein kann oder aber in die Steuereinrichtung 32 integriert ist.

Die Strahleinkopplungsfläche 40 erstreckt sich, parallel zu der Breite 48 des Messabschnitts 46, über eine Breite 62, vergleiche Figur 2, und über eine senkrecht dazu anliegende Höhe 64. Bei der Strahleinkopplungsfläche 40 handelt es sich beispielsweise um einen Teil der Mantelfläche der prismenförmigen Strahleinkopplungseinrichtung 36, im Fall eines Prismas mit rechtwinklig-dreieckiger Grundfläche beispielsweise um eine Hypotenusenfläche oder eine Kathetenfläche.

Die Strahleinkopplungsfläche 40 weist (gedachte) Zeilen 66a, 66b, 66c auf, welche sich über die Breite 62 der Strahleinkopplungsfläche 40 hinweg erstrecken. Die Strahleinkopplungsfläche 40 weist ferner (gedachte) Spalten 68a, 68b, 68c auf, welche sich parallel zu der Höhe 64 der Strahleinkopplungsfläche 40 erstrecken.

Der Anzahl der Zeilen 66 und der Spalten 68 entsprechend ist die Strahleinkopplungsfläche 40 in (gedachte) Felder unterteilt, deren Anzahl der Anzahl der Zeilen 66 multipliziert mit der Anzahl der Spalten 68 entspricht.

Für das Beispiel einer unbewegten ersten Umlenkeinrichtung 16 und einer Verschwenkung der zweiten Umlenkeinrichtung 18 in drei unterschiedliche Schwenklagen wird der Strahl 34 ausgehend von der zweiten Umlenkeinrichtung 18 in eine von drei unterschiedlichen Strahlrichtungen 70a, 70b, 70c umgelenkt, so dass diese drei unterschiedlichen Strahlen in drei unterschiedlichen Strahleinkopplungspositionen 72a, 72b, 72c auf die Strahleinkopplungsfläche 40 treffen. Die genannten unterschiedlichen Strahleinkopplungspositionen 72a bis 72c korrespondieren mit einer Verteilung der Strahleinkopplungspositionen über die Breite 62 der Strahleinkopplungsfläche 40 hinweg.

Für jede der genannten Stahlrichtungen 70a, 70b, 70c ist es ferner möglich, die zweite Umlenkeinrichtung 18 so anzusteuern, dass das zweite Umlenkelement 22 nicht bewegt wird und gleichzeitig die erste Umlenkeinrichtung 16 zur Bewegung des ersten Umlenkelements 20 anzusteuern. Dies geht damit einher, dass innerhalb einer "Spalte" der Strahleinkopplungsfläche 40 die Strahleinkopplungsposition über die Höhe 64 der Strahleinkopplungsfläche 40 hinweg verändert wird, für das Beispiel der Spalte 68c beispielsweise zu weiteren Strahleinkopplungspositionen 72d und 72e.

Die Variation der Strahleinkopplungspositionen über die Höhe 64 der Strahleinkopplungsfläche 40 hinweg beeinflusst den Einfallswinkel, mit welchem ein Strahl in den Messabschnitt 46 eingeleitet wird. Für das Beispiel der Strahleinkopplungspositionen 72a, 72d und 72e ergeben sich in Figur 3 schematisch dargestellte, in den Messabschnitt 46 eingekoppelte Strahlen 70a, 70d, 70e, welche unterschiedliche Einfallswinkel haben, so dass diesen Strahlen jeweils zugeordnete Totalreflexionen 74 an der Begrenzungsfläche des Messabschnitts 46 (also an der Außenseite 54 der Fahrzeugscheibe 12) zueinander versetzt und verschoben angeordnet sind.

Die in den Messabschnitt 46 eingekoppelten Strahlen 70a, 70b, 70c, 70d, 70e werden zeitlich nacheinander in den Messabschnitt 46 eingekoppelt und an der Auskoppelfläche 60 des Messabschnitts 46 ausgekoppelt und in die Sensorfläche 58 der Sensoreinrichtung 56 eingekoppelt. Beispielsweise wird für die Strahlen 70a, 70b, 70c, 70d, 70e durch Integralbildung eine Gesamtintensität bestimmt, wobei eine hohe Intensität mit einer streuverlustfreien Leitung der Strahlen durch den Messabschnitt 46 korreliert und eine niedrige Intensität mit einer streuverlustreichen Leitung der Strahlen durch den Messabschnitt 46. Die Gesamtintensität bildet eine Kenngröße, die als Maß zur Bewertung der Güte der Fahrzeugscheibe 12 dient, insbesondere der Güte des Messabschnitts 46 der Fahrzeugscheibe 12.

Es ist auch möglich, dass die Strahlen 70a, 70b, 70c, 70d, 70e oder eine Teilmenge der Strahlen 70a, 70b, 70c, 70d, 70e in zeitlicher Abfolge und jeweils einzeln an der Sensorfläche 58, insbesondere an unterschiedlichen Positionen der Sensorfläche 58, erfasst werden und dass für jeden dieser erfassten Strahlen ein jeweiliger Intensitätswert gespeichert wird. Dies ermöglicht es, die Intensitätswerte von mindestens zwei unterschiedlichen Strahlen zwecks Bildung einer Kenngröße miteinander vergleichen zu können. Übersteigt diese Kenngröße (also die Differenz oder das Verhältnis von zwei Intensitätswerten) einen vorgebbaren Grenzwert, korrespondiert die Kenngröße mit einer nicht mehr ausreichenden Güte der Fahrzeugscheibe 12, insbesondere des Messabschnitts 46 der Fahrzeugscheibe 12.

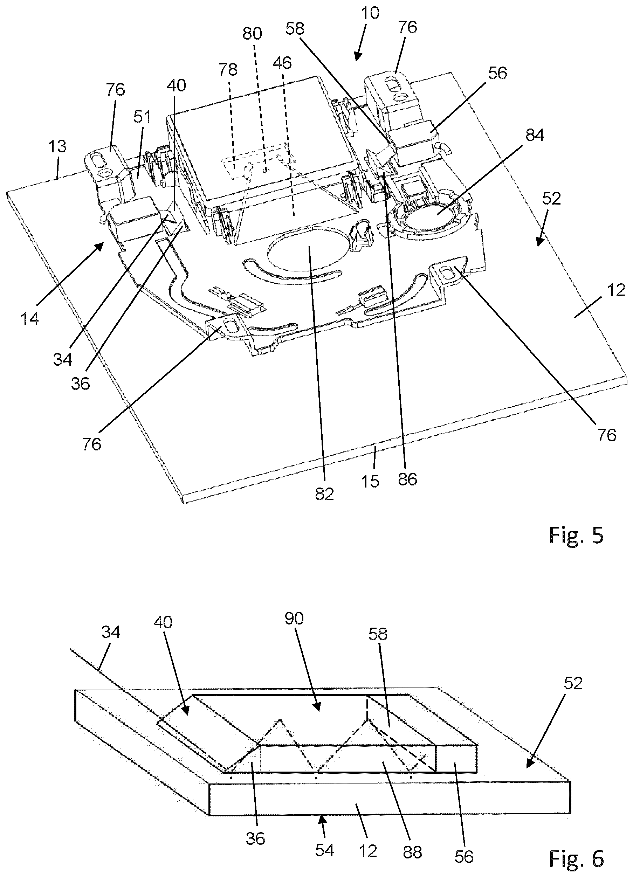

In Figur 5 ist ein System 10 mit einem Halter 51 dargestellt, der mit der Innenseite einer Fahrzeugscheibe 12 verklebt ist oder wird.

Der Halter 51 weist mehrere Befestigungsabschnitte 76 auf, die dazu dienen, eine (in der Zeichnung nicht dargestellte, auch "Beauty-Cover" genannte) Abdeckung zu befestigen.

An dem Halter 51 ist eine Kamera 78 angeordnet, deren Kameralinse 80 ein trapezförmiges Sichtfeld mit einer Umrandung 49 zugeordnet ist.

Benachbart zu dem Sichtfeld der Kamera 78 ist eine Ausnehmung 82 vorgesehen, die zur Aufnahme eines nicht dargestellten Befestigungsfußes eines Rückspiegels dient. Optional weist der Halter 51 eine Regensensoraufnahme 84 auf.

Das System 10 gemäß Figur 5 umfasst eine Strahlungsquelle 14, welche einen gebündelten oder sich in einer Ebene erstreckenden Strahl 34 ausstrahlt, der in vorstehend beschriebener Weise über eine Strahleinkopplungseinrichtung 36 in einen Messabschnitt 46 der Fahrzeugscheibe eingekoppelt und von dort in eine Sensoreinrichtung 56 ausgekoppelt wird, wobei der Sensoreinrichtung 56 eine optionale Strahlauskopplungseinrichtung 86 vorgeschaltet ist.

Die Strahlauskopplungseinrichtung 86 dient zur Auskopplung von Strahlen 34 aus dem Messabschnitt 46 in einen näher zur Fahrzeuginnenseite angeordneten Bereich und zu einer senkrecht zu der Innenseite 52 der Fahrzeugscheibe 12 angeordneten Sensorfläche 58 der Sensoreinrichtung 56.

Bei der Ausführungsform gemäß Figur 5 verlaufen die Strahlen 34 auf ihrem Weg zwischen Strahlungsquelle 14 und Sensoreinrichtung 56 im Wesentlichen quer zu einer Fahrzeuglängsrichtung (abweichend von dem in Figur 4 dargestellten Beispiel).

Im Übrigen wird für den Aufbau und die Funktionsweise der Ausführungsform gemäß Figur 5 auf die vorstehende Beschreibung zu Figuren 1 bis 4 Bezug genommen.

Bei den vorstehend beschriebenen Ausführungsformen ist ein Raum zwischen der Strahleinkopplungseinrichtung 36 und der Sensoreinrichtung 56 bzw. zwischen der Strahleinkopplungseinrichtung 36 und der Strahlauskopplungseinrichtung 86 in einem zu der Fahrzeugscheibe 12 versetzten Bereich leer (vergleiche Figuren 1 bis 4) oder dient zur Anordnung weiterer, optisch nicht leitenden Bauteilen (vergleiche Figur 5). Davon abweichend ist es bei allen vorstehend beschriebenen Ausführungsformen möglich, in einem solchen Raum eine Koppelschicht 88 anzuordnen, vergleiche Figur 6.

Die Koppelschicht 88 besteht aus einem Koppelmaterial, beispielsweise aus Silikon. Die Koppelschicht 88 weist eine der Innenseite 52 der Fahrzeugscheibe 12 abgewandte Kontaktfläche 90 auf, die zur Kontaktierung der Kameralinse 80 oder zur Kontaktierung eines anderen optischen Sensors dient.

Bei Verwendung einer Koppelschicht 88 wird ein Strahl 34 über die Strahleinkopplungseinrichtung 36 in den Messabschnitt 46 der Fahrzeugscheibe 12 eingekoppelt, dort an der Außenseite 54 der Fahrzeugscheibe 12 reflektiert und über die Innenseite 52 der Fahrzeugscheibe 12 in die Koppelschicht 88 eingeleitet. Dort wird der Strahl 34 an der Kontaktfläche 90 reflektiert und gelangt durch die Koppelschicht 88 hindurch wieder in die Fahrzeugscheibe 12, bis schließlich, ggf. nach weiteren Reflexionen, der Strahl 34 zu der Sensoreinrichtung 56 gelangt.

Es ist möglich, dass eine Strahleinkopplungseinrichtung 36 und/oder eine Strahlauskopplungseinrichtung 86 integraler Bestandteil einer Koppelschicht 88 sind.

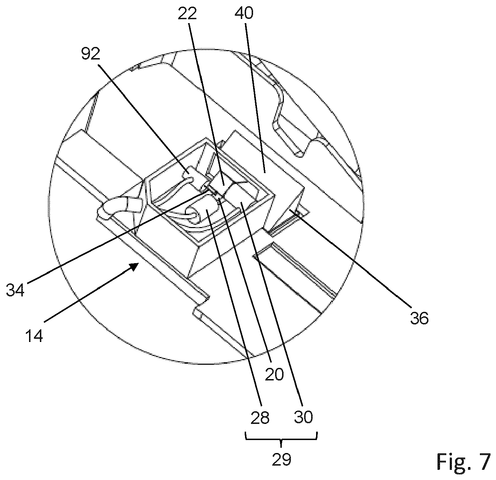

Die Strahlungsquelle 14 des Systems 10 gemäß Fig. 5 ist in Fig. 7 in Alleinstellung, vergrößert und ohne ihre Abdeckung dargestellt. Ausgehend von einer Strahlerzeugungseinrichtung 92 wird ein Strahl 34 über ein erstes Umlenkelement 20 und ein zweites Umlenkelement 22 umgelenkt und gelangt von dort zu der Einkoppelfläche 40. Die Umlenkelemente 20 und 22 sind jeweils durch Schrittmotoren 28, 30 um jeweilige Schwenkachsen angetrieben.

Alternativ oder zusätzlich zu der Umlenkung eines Strahls mittels verschwenkbaren Umlenkelementen ist es auch möglich, die Strahlungsquelle 14 insgesamt oder auch nur die Strahlerzeugungseinrichtung 92 mittels eines entsprechenden Antriebs zu verschieben, beispielsweise zumindest in einer zu der Längserstreckung der Einkoppelfläche 40 parallelen Verschieberichtung (parallel zu der Hauptebene 8 der Fahrzeugscheibe 12) und/oder in dazu senkrechter Richtung.

## Patentansprüche

1. Anordnung, umfassend eine Fahrzeugscheibe (12) und ein System (10) zur Überwachung der Güte der Fahrzeugscheibe (12), wobei die Fahrzeugscheibe (12) transparent ist, sich in einer Hauptebene (8) erstreckt und in einem Fahrzeug eingebaut ist, wobei das System (10) eine Strahlungsquelle (14) zur Erzeugung eines Strahls (34) und mindestens eine Antriebseinrichtung (29) zur Veränderung der Lage und/oder Orientierung des Strahls (34) umfasst sowie ferner eine Strahleinkopplungseinrichtung (36) mit einer Strahleinkopplungsfläche (40) zur Strahleinkopplung des Strahls (34) in die Strahleinkopplungseinrichtung (36), welche den Strahl in einen Messabschnitt (46) weiterleitet, wobei der Messabschnitt (46) durch einen Teilabschnitt der Fahrzeugscheibe (12) gebildet ist und eine zu der Hauptebene (8) parallele Einkoppelfläche (44) aufweist, wobei sich die Strahleinkopplungsfläche (40) über eine Breite (62) und eine dazu senkrechte Höhe (64) erstreckt, und wobei der Strahl (34) in unterschiedlichen Bereichen der Strahleinkopplungsfläche (40) auf die Strahleinkopplungsfläche (40) lenkbar ist.

2. Anordnung nach Anspruch 1, **gekennzeichnet durch** eine Steuereinrichtung (32) zur Steuerung der mindestens einen Antriebseinrichtung (29), wobei die Steuereinrichtung (32) derart eingerichtet ist, dass eine Vielzahl von einzelnen Strahlen auf die Strahleinkopplungsfläche (40) lenkbar sind, wobei die jeweiligen Strahleinkopplungspositionen (72a, 72b, 72c, 72d, 72e) auf der Strahleinkopplungsfläche (40) zueinander versetzt und sowohl über die Breite (62) als auch über die Höhe (64) der Strahleinkopplungsfläche (40) verteilt angeordnet sind.

3. Anordnung nach einem der vorstehenden Ansprüche, **dadurch gekennzeichnet, dass** die mindestens eine Antriebseinrichtung (29) mit mindestens einer Umlenkeinrichtung (16, 18) zusammenwirkt, die mindestens ein um eine Schwenkachse (24, 26) verschwenkbares Umlenkungselement (20, 22) zur Umlenkung des Strahls (34) aufweist.

4. Anordnung nach Anspruch 3, **gekennzeichnet durch** zwei Umlenkeinrichtungen (16, 18) mit zueinander winkligen, insbesondere zueinander senkrechten, Schwenkachsen (24, 26).

5. Anordnung nach einem der vorstehenden Ansprüche, **dadurch gekennzeichnet, dass** sich die Strahleinkopplungseinrichtung (36) über eine Breite (48) des Messabschnitts (46) hinweg entlang einer Hauptachse (38) erstreckt.

6. Anordnung nach einem der vorstehenden Ansprüche, **dadurch gekennzeichnet, dass** das System (10) eine Sensoreinrichtung (56) zur Erfassung einer Intensität eines aus dem Messabschnitt (46) ausgekoppelten Strahls umfasst.

7. Anordnung nach Anspruch 6, **dadurch gekennzeichnet, dass** eine Sensorfläche (58) der Sensoreinrichtung (56) an einer Auskoppelfläche (60) des Messabschnitts (46) anliegt.

8. Anordnung nach Anspruch 6, **dadurch gekennzeichnet, dass** zwischen einer Sensorfläche (58) der Sensoreinrichtung (56) und einer Auskoppelfläche (60) des Messabschnitts (46) eine Koppelschicht (88) angeordnet ist.

9. Anordnung nach einem der Ansprüche 6 bis 8, **dadurch gekennzeichnet, dass** die Sensoreinrichtung (56) zur Lagerung der Sensoreinrichtung (56) in Koppelmaterial eingegossen ist.

10. Anordnung nach einem der Ansprüche 6 bis 9, **dadurch gekennzeichnet, dass** das System (10) eine Auswerteeinrichtung zur Auswertung einer für eine Vielzahl von einzelnen Strahlen jeweils erfassten Intensität aufweist.

11. Anordnung nach einem der vorstehenden Ansprüche, **dadurch gekennzeichnet, dass** der Messabschnitt (46) einem optischen Sensor, einer Kamera (78), einem Radarsensor und/oder einem Lidarsensor eines Fahrzeugs, insbesondere einem Halter (51) für Sensoren und/oder für mindestens eine Kamera (78) eines Fahrerassistenzsystems, zugeordnet ist.

12. Anordnung nach einem der vorstehenden Ansprüche, **dadurch gekennzeichnet, dass** das System (10) eine Umgebungssensoreinrichtung zur Erfassung eines Umgebungszustands in der fahrzeugaußenseitigen Umgebung des Messabschnitts (46) aufweist.

13. Verfahren zur Überwachung der Güte einer transparenten, sich in einer Hauptebene (8) erstreckenden Fahrzeugscheibe (12), unter Verwendung einer Anordnung nach einem der vorstehenden Ansprüche, umfassend:
a) Strahleinkopplung eines Strahls in die Strahleinkopplungsfläche (40) der Strahleinkopplungseinrichtung (36),
b) Leitung des Strahls durch den Messabschnitt (46), wobei der Strahl mindestens einmal an einer der Einkoppelfläche (44) des Messabschnitts (46) abgewandten Begrenzungsfläche (54) des Messabschnitts (46) totalreflektiert,
c) Auskopplung des Strahls aus dem Messabschnitt (46) und Erfassung der Intensität des ausgekoppelten Strahls,
d) Wiederholung der Schritte a) bis c) für eine Vielzahl von Strahlen, deren jeweilige Strahleinkopplungspositionen (72a, 72b, 72c, 72d, 72e) auf der Strahleinkopplungsfläche (40) zueinander versetzt und sowohl über die Breite (62) als auch über die Höhe (64) der Strahleinkopplungsfläche (40) verteilt angeordnet sind,
e) Bildung mindestens einer Kenngröße, welche die Güte der Fahrzeugscheibe (12) betrifft, unter Berücksichtigung der in den Schritten c) erfassten Intensitäten der ausgekoppelten Strahlen.

14. Verfahren nach Anspruch 13, **dadurch gekennzeichnet, dass** das Verfahren zur Bildung einer Referenz-Kenngröße mit einem gereinigten, unbeschädigten Messabschnitt (46) durchgeführt wird und dass das Verfahren zur Bildung einer Ist-Kenngröße mit einem Messabschnitt (46) einer Fahrzeugscheibe (12) durchgeführt wird, die in ein Fahrzeug eingebaut ist, das in Betrieb genommen ist.

15. Verfahren nach Anspruch 13 oder 14, **dadurch gekennzeichnet, dass** ein Umgebungszustand in der außenseitigen Umgebung der Fahrzeugscheibe (12), insbesondere des Messabschnitts (46), erfasst wird, und dass das Verfahren unter der Bedingung durchgeführt wird, dass der Umgebungszustand einen Grenzwert, insbesondere einen Grenzwert für eine maximale Feuchte oder Verschmutzung, nicht überschreitet.

16. Verfahren nach Anspruch 13 oder 14, **dadurch gekennzeichnet, dass** die gebildete Kenngröße zur Ermittlung eines Umgebungszustands in der außenseitigen Umgebung der Fahrzeugscheibe (12) verwendet wird.

## Claims

1. Arrangement comprising a vehicle pane (12) and a system (10) for monitoring the quality of the vehicle pane (12), wherein the vehicle pane (12) is transparent, extends in a main plane (8) and is installed in a vehicle, wherein the system (10) comprises a radiation source (14) for generating a beam (34) and at least one drive device (29) for changing the position and/or orientation of the beam (34), and additionally a beam in-coupling device (36) with a beam in-coupling surface (40) for coupling the beam (34) into the beam in-coupling device (36), which further guides the beam into a measuring portion (46), wherein the measuring portion (46) is formed by a subportion of the vehicle pane (12) and has an in-coupling surface (44) parallel to the main plane (8), wherein the beam in-coupling surface (40) extends over a width (62) and a height (64) perpendicular thereto, and wherein the beam (34) is directable onto the beam in-coupling surface (40) in different regions of the beam in-coupling surface (40).

2. Arrangement according to claim 1, **characterized by** a control device (32) for controlling the at least one drive device (29), wherein the control device (32) is configured in such a way that a plurality of individual beams are directable onto the beam in-coupling surface (40), wherein the respective beam in-coupling positions (72a, 72b, 72c, 72d, 72e) are offset from each other on the beam in-coupling surface (40) and are distributed over both the width (62) and the height (64) of the beam in-coupling surface (40).

3. Arrangement according to either of the preceding claims,
**characterized in that** the at least one drive device (29) interacts with at least one deflection device (16, 18) which has at least one deflection element (20, 22) for deflecting the beam (34) that is pivotable about a pivot axis (24, 26).

4. Arrangement according to claim 3, **characterized by** two deflection devices (16, 18) with pivot axes (24, 26) that are at an angle to each other, in particular that are perpendicular to each other.

5. Arrangement according to any of the preceding claims,
**characterized in that** the beam in-coupling device (36) extends over a width (48) of the measuring portion (46) along a main axis (38).

6. Arrangement according to any of the preceding claims,
**characterized in that** the system (10) comprises a sensor device (56) for detecting the intensity of a beam coupled out of the measuring portion (46).

7. Arrangement according to claim 6, **characterized in that** a sensor surface (58) of the sensor device (56) rests against an out-coupling surface (60) of the measuring portion (46).

8. Arrangement according to claim 6, **characterized in that** a coupling layer (88) is arranged between a sensor surface (58) of the sensor device (56) and an out-coupling surface (60) of the measuring portion (46).

9. Arrangement according to any of claims 6 to 8, **characterized in that** the sensor device (56) is molded in coupling material in order to position the sensor device (56).

10. Arrangement according to any of claims 6 to 9, **characterized in that** the system (10) has an evaluation device for evaluating an intensity detected for each of a plurality of individual beams.

11. Arrangement according to any of the preceding claims, **characterized in that** the measuring portion (46) is assigned to an optical sensor, a camera (78), a radar sensor and/or a lidar sensor of a vehicle, in particular to a holder (51) for sensors and/or for at least one camera (78) of a driver assistance system.

12. Arrangement according to any of the preceding claims, **characterized in that** the system (10) has a surroundings sensor device for detecting a surroundings condition in the vehicle-external surroundings of the measuring portion (46).

13. Method for monitoring the quality of a transparent vehicle pane (12) extending in a main plane (8) using an arrangement according to any of the preceding claims, comprising the steps of:
a) coupling a beam into the beam in-coupling surface (40) of the beam in-coupling device (36),
b) guiding the beam through the measuring portion (46), wherein the beam undergoes total reflection at least once at a boundary surface (54) of the measuring portion (46) that faces away from the in-coupling surface (44) of the measuring portion (46),
c) coupling the beam out of the measuring portion (46) and detecting the intensity of the out-coupled beam,
d) repeating steps a) to c) for a plurality of beams, the respective beam in-coupling positions (72a, 72b, 72c, 72d, 72e) of which are offset from each other on the beam in-coupling surface (40) and are distributed over both the width (62) and the height (64) of the beam in-coupling surface (40),
e) forming at least one characteristic value relating to the quality of the vehicle pane (12), taking into account the intensities of the out-coupled beams detected in each step c).

14. Method according to claim 13, **characterized in that** the method for forming a reference characteristic value is performed with a cleaned, undamaged measuring portion (46) and **in that** the method for forming an actual characteristic value is performed with a measuring portion (46) of a vehicle pane (12) that is installed in a vehicle that is put into operation.

15. Method according to claim 13 or 14, **characterized in that** a surroundings condition in the external surroundings of the vehicle pane (12), in particular of the measuring portion (46), is detected, and **in that** the method is performed under the requirement that the surroundings condition does not exceed a limit value, in particular a limit value for a maximum humidity or soiling.

16. Method according to claim 13 or 14, **characterized in that** the formed characteristic value is used to ascertain a surroundings condition in the external surrounding of the vehicle pane (12).

## Revendications

1. Dispositif comprenant un pare-brise (12) et un système (10) de surveillance de la qualité du pare-brise (12), le pare-brise (12) étant transparent, s'étendant dans un plan principal (8) et étant installé dans un véhicule, le système (10) comprenant une source de rayonnement (14) pour générer un faisceau (34) et au moins un mécanisme d'entraînement (29) pour modifier la position et/ou l'orientation du faisceau (34), ainsi qu'un dispositif d'incouplement du faisceau (36) muni d'une surface d'incouplement du faisceau (40) pour l'incouplement du faisceau (34) dans le dispositif d'incouplement du faisceau (36), qui guide le faisceau vers une section de mesure (46), la section de mesure (46) étant formée par un sous-ensemble du pare-brise (12) et présentant une surface d'incouplement (44) parallèle au plan principal (8), la surface d'incouplement du faisceau (40) s'étendant sur une largeur (62) et une hauteur (64) perpendiculaire à celle-ci, et le faisceau (34) pouvant être dirigé sur différents secteurs de la surface d'incouplement du faisceau (40).

2. Dispositif selon la revendication 1, **caractérisé par** un dispositif de commande (32) pour commander au moins un mécanisme d'entraînement (29), le dispositif de commande (32) étant configuré de sorte qu'un grand nombre de faisceaux individuels puissent être dirigés vers la surface d'incouplement du faisceau (40), les positions d'incouplement du faisceau respectives (72a, 72b, 72c, 72d, 72e) sur la surface d'incouplement du faisceau (40) décalées les unes par rapport aux autres et disposées de façon répartie tant sur la largeur (62) que sur la hauteur (64) de la surface d'incouplement du faisceau (40).

3. Dispositif selon l'une quelconque des revendications précédentes, **caractérisé en ce que** ledit au moins un mécanisme d'entraînement (29) coopère avec au moins un dispositif de déviation (16, 18), lequel comporte au moins un élément de déviation (20, 22) susceptible d'être articulé autour d'un axe de pivotement (24, 26) pour dévier le faisceau (34).

4. Dispositif selon la revendication 3, **caractérisé par** deux dispositifs de déviation (16, 18) aux axes de pivotement angulaires l'un par rapport à l'autre, en particulier perpendiculaires entre eux (24, 2 6).

5. Dispositif selon l'une quelconque des revendications précédentes, **caractérisé en ce que** le dispositif d'incouplement du faisceau (36) s'étend le long d'un axe principal (38) sur une largeur (48) de la section de mesure (46).

6. Dispositif selon l'une quelconque des revendications précédentes, **caractérisé en ce que** le système (10) comprend un dispositif de détection (56) pour la détection de l'intensité d'un faisceau extrait de la section de mesure (46).

7. Dispositif selon la revendication 6, **caractérisé en ce que** la surface du capteur (58) du dispositif de détection (56) est en contact avec une surface de découplage (60) de la section de mesure (46).

8. Dispositif selon la revendication 6, **caractérisé en ce qu'**une couche de couplage (88) est disposée entre une surface du capteur (58) du dispositif de détection (56) et une surface de découplage (60) de la section de mesure (46).

9. Dispositif selon l'une quelconque des revendications 6 à 8, **caractérisé en ce que** le dispositif de détection (56) est moulé dans un matériau de couplage afin d'assurer sa fixation.

10. Dispositif selon l'une quelconque des revendications 6 à 9, **caractérisé en ce que** le système (10) comprend un dispositif d'évaluation pour l'analyse de l'intensité mesurée pour chacun d'une pluralité de faisceaux individuels.

11. Dispositif selon l'une quelconque des revendications précédentes, **caractérisé en ce que** la section de mesure (46) est attribuée à un capteur optique, une caméra (78), un capteur radar et/ou un capteur lidar d'un véhicule, en particulier à un support (51) pour capteurs et/ou pour au moins une caméra (78) d'un système d'aide à la conduite.

12. Dispositif selon l'une quelconque des revendications précédentes, **caractérisé en ce que** le système (10) comporte un dispositif de capteurs d'environnement pour la détection d'un état ambiant dans l'environnement extérieur au véhicule de la section de mesure (46).

13. Procédé de surveillance de la qualité d'un pare-brise (12) transparent s'étendant dans un plan principal (8), en utilisant un dispositif selon l'une quelconque des revendications précédentes, comprenant :
a) Incouplement d'un faisceau dans la surface d'incouplement du faisceau (40) du dispositif d'incouplement du faisceau (36),
b) Conduite du faisceau à travers la section de mesure (46), le faisceau étant au moins une fois totalement réfléchi sur l'une des surfaces limitantes (54) de la section de mesure (46) opposée à la surface d'incouplement (44) de la section de mesure (46),
c) Découplage du faisceau hors de la section de mesure (46) et mesure de l'intensité du faisceau découplé,
d) Répétition des étapes a) à c) pour une pluralité de faisceaux, dont les positions d'incouplement du faisceau (72a, 72b, 72c, 72d, 72e) sur la surface d'incouplement du faisceau (40) sont décalées les unes par rapport aux autres et réparties à la fois sur la largeur (62) et sur la hauteur (64) de la surface d'incouplement du faisceau (40),
e) Détermination d'au moins une grandeur caractéristique se rapportant à la qualité du pare-brise (12), en tenant compte des intensités des faisceaux découplés mesurées à l'étape c).

14. Procédé selon la revendication 13, **caractérisé en ce que** le procédé de formation d'une grandeur caractéristique de référence est réalisé avec une section de mesure (46) nettoyée et non endommagée, et **en ce que** le procédé de formation d'une grandeur caractéristique réelle est réalisé avec une section de mesure (46) d'un pare-brise (12) montée dans un véhicule mis en service.

15. Procédé selon la revendication 13 ou 14, **caractérisé en ce que** l'état ambiant dans l'environnement extérieur du pare-brise (12), en particulier de la section de mesure (46), est détecté, et que le procédé est réalisé à la condition que l'état ambiant ne dépasse pas une valeur seuil, en particulier une valeur seuil pour une humidité maximale ou pour la saleté.

16. Procédé selon la revendication 13 ou 14, **caractérisé en ce que** la grandeur caractéristique ainsi formée est utilisée pour déterminer un état ambiant dans l'environnement extérieur du pare-brise (12).
